# EUROPÄISCHE PATENTANMELDUNG

(11) **EP 4 227 491 A1**
(43) Veröffentlichungstag der Anmeldung: **16.08.2023**
(21) Anmeldenummer: 23151615.4
(22) Anmeldetag: 13.01.2023
(51) Int. Cl.: F01D 5/30, F01D 11/00

(54) **LAUFSCHAUFEL FÜR EINE GASTURBINE, SYSTEM MIT EINER LAUFSCHAUFEL UND EINEM SCHAUFELFUSSSCHUTZBLECH, LAUFSCHAUFELSCHEIBE UND GASTURBINE**

(30) Priorität: 14.02.2022 DE 102022103345
(71) Anmelder: MTU Aero Engines AG, 80995 München (DE)
(72) Erfinder: Feldmann, Manfred, 80995 München (DE); Stanka, Rudolf, 80995 München (DE)

(57) **Zusammenfassung**

Die Erfindung betrifft eine Laufschaufel (40) für eine Gasturbine (10), insbesondere Fluggasturbine, mit einem Schaufelfuß (42), einem sich in Radialrichtung (RR) an den Schaufelfuß (42) anschließenden Schaufelhals (44), einem sich in Radialrichtung (RR) an den Schaufelhals (44) anschließenden Schaufelblatt (46), einer radial äußeren Schottwand (48), welche einen radial inneren Begrenzungsabschnitt (50) eines Ringraums einer Gasturbine (10) bildet, einer axial vorderen Schottwand (52) und einer axial hinteren Schottwand (54), die mit der radial äußeren Schottwand (48) verbunden sind, so dass die Schottwände (48, 52, 54) den Schaufelhals (44) von drei Seiten umgeben, wobei die Schottwände (48, 52, 54) in Umfangsrichtung (UR) über den Schaufelhals (44) vorstehen, wobei die Laufschaufel (40) zur Anordnung in einer Schaufelfußaufnehme einer Rotorscheibe mit einem zwischen Schaufelfuß (42) und Rotorscheibe angeordnetem Schaufelfußschutzblech (60) vorgesehenen ist, wobei das Schaufelfußschutzblech (60) wenigstens einen Dichtungsabschnitt (62) aufweist, der sich in Axialrichtung (AR) von der vorderen Schottwand (52) zu der hinteren Schottwand (54) erstreckt und dessen radiale Außenseite (62a) gegenüber der radial äußeren Schottwand (48) angeordnet ist, wenn das Schaufelfußschutzblech (60) am Schaufelfuß (42) angeordnet ist, wobei ein oder mehrere Nocken (45) an dem Schaufelhals (44) zum Abstützen des Dichtungsabschnitts (62) angeordnet und mit dem Schaufelhals (44) integral verbunden sind.

## Beschreibung

Die vorliegende Erfindung betrifft eine Laufschaufel für eine Gasturbine, insbesondere Fluggasturbine, mit einem Schaufelfuß, einem sich in Radialrichtung an den Schaufelfuß anschließenden Schaufelhals, einem sich in Radialrichtung an den Schaufelhals anschließenden Schaufelblatt, einer radial äußeren Schottwand, welche einen radial inneren Begrenzungsabschnitt eines Ringraums einer Gasturbine bildet, einer axial vorderen Schottwand und einer axial hinteren Schottwand, die mit der radial äußeren Schottwand verbunden sind, so dass die Schottwände den Schaufelhals von drei Seiten umgeben, wobei die Schottwände in Umfangsrichtung über den Schaufelhals vorstehen, wobei die Laufschaufel zur Anordnung in einer Schaufelfußaufnehme einer Rotorscheibe mit einem zwischen Schaufelfuß und Rotorscheibe angeordnetem Schaufelfußschutzblech vorgesehenen ist, wobei das Schaufelfußschutzblech wenigstens einen Dichtungsabschnitt aufweist, der sich in Axialrichtung von der vorderen Schottwand zu der hinteren Schottwand erstreckt und dessen radiale Außenseite gegenüber der radial äußeren Schottwand angeordnet ist, wenn das Schaufelfußschutzblech am Schaufelfuß angeordnet ist.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt.

Die für die Laufschaufel vorgesehenen Schaufelfußschutzbleche bilden ein kastenartiges Profil mit einem länglichen freien Dichtungsabschnitt, um einen Zwischenraum zwischen der vorderen und hinteren Schottwand zu überbrücken und abzudichten.

Es wurde die Problematik erkannt, dass es bei langfristiger und/oder sehr starker Belastung durch hohe Temperaturen und/oder Schwingungen an dem Dichtungsabschnitt zu einer plastischen Verformung oder einem Versagen kommen kann. Die der Erfindung zu Grunde liegende Aufgabe ist es, eine Laufschaufel bereitzustellen, die es einem mit ihr zum Einsatz in einem System für eine Gasturbine vorgesehenen Schaufelfußschutzblech erlaubt, länger andauernden Belastungen (HCF - high cycle fatigue) und/oder hohen Belastungen besser Stand zu halten.

Diese Aufgabe wird durch eine Laufschaufel mit den Merkmalen des Anspruchs 1 gelöst. Weitere optionale und vorteilhafte Merkmale sind in den abhängigen Ansprüchen angegeben.

Erfindungsgemäß wird eine Laufschaufel für eine Gasturbine, insbesondere Fluggasturbine, vorgeschlagen, mit einem Schaufelfuß, einem sich in Radialrichtung an den Schaufelfuß anschließenden Schaufelhals, einem sich in Radialrichtung an den Schaufelhals anschließenden Schaufelblatt, einer radial äußeren Schottwand, welche einen radial inneren Begrenzungsabschnitt eines Ringraums einer Gasturbine bildet, einer axial vorderen Schottwand und einer axial hinteren Schottwand, die mit der radial äußeren Schottwand verbunden sind, so dass die Schottwände den Schaufelhals von drei Seiten umgeben, wobei die Schottwände in Umfangsrichtung über den Schaufelhals vorstehen, wobei die Laufschaufel zur Anordnung in einer Schaufelfußaufnahme einer Rotorscheibe mit einem zwischen Schaufelfuß und Rotorscheibe angeordnetem Schaufelfußschutzblech vorgesehenen ist, wobei das Schaufelfußschutzblech wenigstens einen Dichtungsabschnitt aufweist, der sich in Axialrichtung von der vorderen Schottwand zu der hinteren Schottwand erstreckt und dessen radiale Außenseite gegenüber der radial äußeren Schottwand angeordnet ist, wenn das Schaufelfußschutzblech am Schaufelfuß angeordnet ist. Dabei sind ein oder mehrere Nocken an dem Schaufelhals zum Abstützen des Dichtungsabschnitts, insbesondere um diesen nach radial außen abzustützen, angeordnet und mit dem Schaufelhals integral verbunden. Hierdurch wird vorteilhaft eine maximale Temperatur- und/oder Schwingungsverformung des Dichtungsabschnitts begrenzt und länger andauernden Belastungen des Dichtungsabschnitts vorteilhaft reduziert. Insbesondere weist der Dichtungsabschnitt so besonders vorteilhaft auch ein reduziertes Kriechverhalten auf.

Der Dichtungsabschnitt kann bei der bestimmungsgemäßen Verwendung zwischen einer radialen Außenseite eines betreffenden Scheibenhöckers der Rotorscheibe und dem ein oder mehrere Nocken angeordnet sein und/oder einen Bereich einer bzw. der radialen Außenseite eines bzw. des betreffenden Scheibenhöckers der Rotorscheibe abschirmen.

Der Dichtungsabschnitt kann bei der bestimmungsgemäßen Verwendung an der radialen Außenseite eines bzw. des betreffenden Scheibenhöckers der Rotorscheibe anliegen und diese dabei insbesondere berühren oder unter der Bildung eines Spalts dieser beanstandet sein.

In einer bevorzugten Weiterbildung sind mindestens zwei Nocken vorgesehen. Insbesondere sind genau zwei Nocken vorgesehen. Genau zwei Nocken sind ein besonders vorteilhafter Kompromiss zwischen Anlagefläche und Gewichtszunahme, um die Ermüdung des Dichtungsabschnitts aufgrund von Temperatur und/oder Schwingungen zu reduzieren. Die Nocken können vorteilhaft gleichmäßig über die Erstreckung des Dichtungsabschnitts in axialer Richtung verteilt sein.

Besonders bevorzugt sind die eine oder die mehreren Nocken in radialer und/oder axialer Richtung konvex, insbesondere ohne Hinterschnitte in radialer und/oder axialer Richtung, ausgebildet sind. Dadurch kann die Laufschaufel, insbesondere wenn es sich um eine als Gussteil ausgebildete Laufschaufel handelt, besonders einfach hergestellt werden. Dabei kann die konvexe Krümmung der Nocken zumindest teilweise zu einer Oberfläche der Dichtungsabschnitte komplementär ausgebildet sein.

Ein Aspekt der Erfindung betrifft ein System mit einer oben beschriebenen Laufschaufel und einem Schaufelfußschutzblech, das wenigstens einen Dichtungsabschnitt aufweist, der sich in Axialrichtung von der vorderen Schottwand der Laufschaufel zu der hinteren Schottwand der Laufschaufel erstreckt und dessen radiale Außenseite gegenüber der radial äußeren Schottwand der Laufschaufel angeordnet ist, wenn das Schaufelfußschutzblech am Schaufelfuß angeordnet ist.

In einer besonders bevorzugten Weiterbildung des Systems ist zwischen der oder den Nocken und dem Dichtungsabschnitt des Schaufelfußschutzblechs eine Presspassung vorgesehen. Vorteilhaft wird so eine direkte Kraftübertragung zwischen Dichtungsabschnitt und Schaufelhals ermöglicht, so dass Schwingungen des Systems einen geringeren Einfluss auf Ermüdung des Dichtungsabschnitts haben.

In einer besonderen Weiterbildung entspricht die Anzahl und/oder die Positionen der Nocken einer Anzahl und/oder Position einer Mode mit den größten, ohne Nocken auftretenden strukturellen Ermüdungsstellen entlang der Längserstreckung des Dichtungsabschnitts in Axialrichtung. Hierdurch wird gezielt und mit minimalem zusätzlichen Gewicht eine Schwingung des Dichtungsabschnitts reduziert.

Die oben genannte Aufgabe wird in einem weiteren Aspekt der Erfindung auch durch eine Laufschaufelscheibe mit mehreren in Umfangsrichtung nebeneinander angeordneten Laufschaufelaufnahmen gelöst, in die ein Schaufelfuß einer jeweiligen Laufschaufel des Systems eingeführt ist, wie es oben beschrieben worden ist, und mit mehreren zwischen den Laufschaufelaufnahmen ausgebildeten Scheibenhöckern. Dabei ist der Dichtungsabschnitt des Schaufelfußschutzblechs mit seiner radialen Innenseite gegenüber einer radialen Außenseite eines betreffenden Scheibenhöckers angeordnet. Somit kann der Dichtungsabschnitt das Eindringen bzw. Einziehen von Heißgas zu den Scheibenhöckern wirksam verhindern.

Schließlich wird die obige Aufgäbe auch gelöst durch eine Gasturbine, insbesondere Fluggasturbine mit wenigstens einer solchen Laufschaufelscheibe. Dabei kann die Laufschaufelscheibe insbesondere Teil einer Turbinenstufe der Gasturbine sein. Nachfolgend wird die Erfindung unter Bezugnahme auf die anliegenden Figuren beispielhaft und nicht einschränkend beschrieben.
- Fig. 1: zeigt in einer vereinfachten schematischen Darstellung ein Prinzipbild einer Fluggasturbine
- Fig. 2: zeigt in einer vereinfachten und schematischen Perspektivdarstellung eine Laufschaufel mit Schaufelfußschutzblech und zwei Nocken an dem Schaufelhals.
- Fig. 3: zeigt eine Schnittdarstellung etwa entsprechend der Schnittlinie III-III der Fig. 1 und 2.
- Fig. 4: zeigt in einer vereinfachten und schematischen Perspektivdarstellung eine Laufschaufel mit Schaufelfußschutzblech und einer Nocke an dem Schaufelhals.

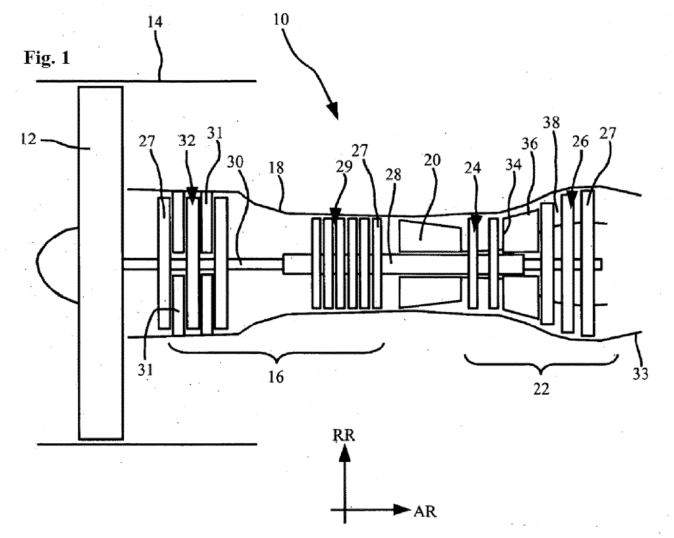

Fig. 1 zeigt schematisch und vereinfacht eine Fluggasturbine 10, die rein beispielhaft als Mantelstromtriebwerk illustriert ist. Die Gasturbine 10 umfasst einen Fan 12, der von einem angedeuteten Mantel 14 umgeben ist. In Axialrichtung AR der Gasturbine 10 schließt sich an den Fan 12 ein Verdichter 16 an, der in einem angedeuteten inneren Gehäuse 18 aufgenommen ist und einstufig oder mehrstufig ausgebildet sein kann. An den Verdichter 16 schließt sich die Brennkammer 20 an. Aus der Brennkammer ausströmendes heißes Abgas strömt dann durch die sich anschließende Turbine 22, die einstufig oder mehrstufig ausgebildet sein kann. Im vorliegenden Beispiel umfasst die Turbine 22 eine Hochdruckturbine 24 und eine Niederdruckturbine 26. Eine Hohlwelle 28 verbindet die Hochdruckturbine 24 mit dem Verdichter 16, insbesondere einem Hochdruckverdichter 29, so dass diese gemeinsam angetrieben bzw. gedreht werden. Eine in Radialrichtung RR der Turbine weitere innen liegende Welle 30 verbindet die Niederdruckturbine 26 mit dem Fan 12 und mit einem Niederdruckverdichter 32, so dass diese gemeinsam angetrieben bzw. gedreht werden. An die Turbine 22 schließt sich eine hier nur angedeutete Schubdüse 33 an.

Im dargestellten Beispiel einer Fluggasturbine 10 ist zwischen der Hochdruckturbine 24 und der Niederdruckturbine 26 ein Turbinenzwischengehäuse 34 angeordnet, das um die Wellen 28, 30 angeordnet ist. In seinem radial äußeren Bereich 36 wird das Turbinenzwischengehäuse 34 von heißen Abgasen aus der Hochdruckturbine 24 durchströmt. Das heiße Abgas gelangt dann in einen Ringraum 38 der Niederdruckturbine 26. Von den Verdichtern 29, 32 und den Turbinen 24, 26 sind beispielhaft Laufschaufelkränze 27 dargestellt. Üblicherweise vorhandene Leitschaufelkränze 31 sind aus Gründen der Übersicht beispielhaft nur bei dem Verdichter 32 dargestellt.

Die nachfolgende Beschreibung einer Ausführungsform der Erfindung bezieht sich insbesondere auf die Laufschaufeln, die in einem Laufschaufelkranz 27 des Verdichters 16 oder der Turbine 22 eingesetzt werden können.

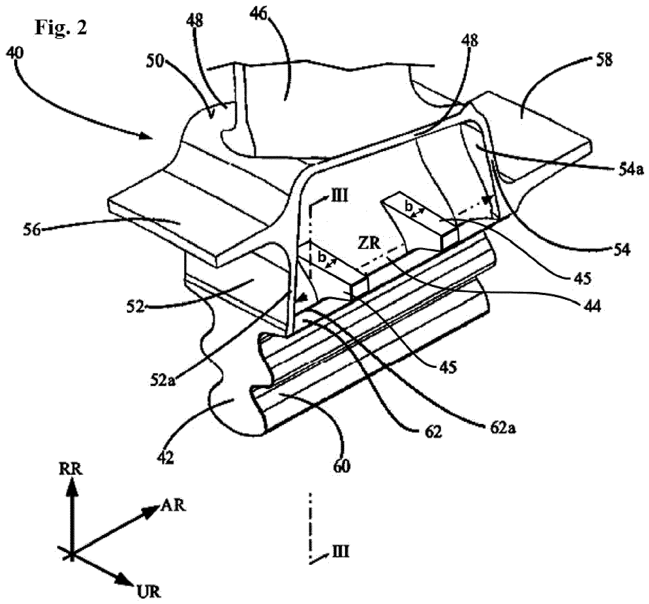

Fig. 2 zeigt eine vereinfachte und schematische Perspektivdarstellung einer Laufschaufel 40 für ein erfindungsgemäßes System. Die Laufschaufel 40 umfasst einen Schaufelfuß 42. Der Schaufelfuß 42 ist hier beispielhaft als mit einem sogenannten Tannenbaumprofil ausgebildet. In Radialrichtung RR schließt sich an den Schaufelfuß42 ein Schaufelhals 44 an. Der Schaufelhals 44 geht in das Schaufelblatt 46 über.

Die Laufschaufel 40 umfasst ferner eine radial äußere Schottwand 48, die zwischen dem Schaufelblatt 46 und dem Schaufelhals 44 angeordnet ist. Die radiale Außenseite 50 der Schottwand 48 bildet einen Teil eines Ringraums einer Gasturbine, wenn die Laufschaufel bestimmungsgemäß in einer Gasturbine eingebaut ist. Die Laufschaufel 40 umfasst weitere eine axial vordere Schottwand 52 und eine axial hintere Schottwand 54. Die axial vordere Schottwand 52 und die axial hintere Schottwand 54 sind mit der radial äußeren Schottwand 48 verbunden, insbesondere integral ausgebildet. Wie aus der Fig. 2 ersichtlich umgeben die Schottwände 48, 52, 54 den Schaufelhals 44 von drei Seiten. Mit der jeweiligen Schottwand 52, 54 kann ein vorderer Deckbandabschnitt 56 bzw. ein hinterer Deckbandabschnitt 58 verbunden sein.

Entlang des Schaufelfußes 42, insbesondere entlang dessen Außenkontur, ist ein Schaufelfußschutzblech 60 angeordnet. Das Schaufelfußschutzblech 60 umfasst radial außen einen Dichtungsabschnitt 62. Der Dichtungsabschnitt 62erstreckt sich in Axialrichtung AR von der vorderen Schottwand 52 zu der hinteren Schottwand 54. Insbesondere überbrückt der Dichtungsabschnitt 62 einen Zwischenraum ZR, der zwischen der vorderen Schottwand 52 und der hinteren Schottwand 54 ausgebildet ist. Insbesondere ist der Dichtungsabschnitt derart dimensioniert, dass er den Zwischenraum ZR überbrückt, der zwischen einem überstehenden Abschnitt 52a der axial vorderen Schottwand.52 und einem überstehenden Abschnitt 54a der axial hinteren Schottwand 54 gebildet ist. Die Abschnitte 52a, 52 stehen dabei in Umfangsrichtung UR über den Schaufelhals 44 vor. Eine radiale Außenseite 62a des Dichtungsabschnitts 62 ist in Radialrichtung RR gegenüber der radial äußeren Schottwand 48 angeordnet.

Der Dichtungsabschnitt 62 wird in radialer Richtung von zwei Nocken 45 des Schaufelhalses 44 gestützt. Die Nocken 45 liegen innerhalb des Zwischenraums ZR. Jede der Nocken 45 weist eine Breite b auf, die kleiner als der Zwischenraum ZR ist. Die Nocken 45 stützen dabei den Dichtungsabschnitt 62 mit Anlageflächen 45a, die zu der Oberfläche des Dichtungsabschnitt 62 komplementär ausgebildet sind, um insbesondere eine Presspassung mit der Oberfläche des Dichtungsabschnitts 62 bilden zu können. Es kann auch vorgesehen sein, dass die Anlageflächen 45a der Nocken 45 zumindest teilweise in Umfangsrichtung kom plem entär zu dem Dichtungsabschnitt 62 ausgebildet sind. Die Nocken 45 stützen in dem vorliegenden gezeigten Ausführungsbeispiel den jeweiligen Dichtungsabschnitt 62 über dessen gesamte Erstreckung in Umfangsrichtung UR. Es kann auch vorgesehen sein, dass die Nocken 45 in Umfangsrichtung UR kürzer ausgebildet sind und somit zumindest teilweise den Dichtungsabschnitt 62 in Umfangsrichtung UR stützen. Es ferner kann vorgesehen sein, dass die Nocken 45 an ihren Kanten gekrümmt ausgebildet sind und/oder dass die Nocken 45 als konvexe Ausbuchtungen des Schaufelhalses ausgebildet sind.

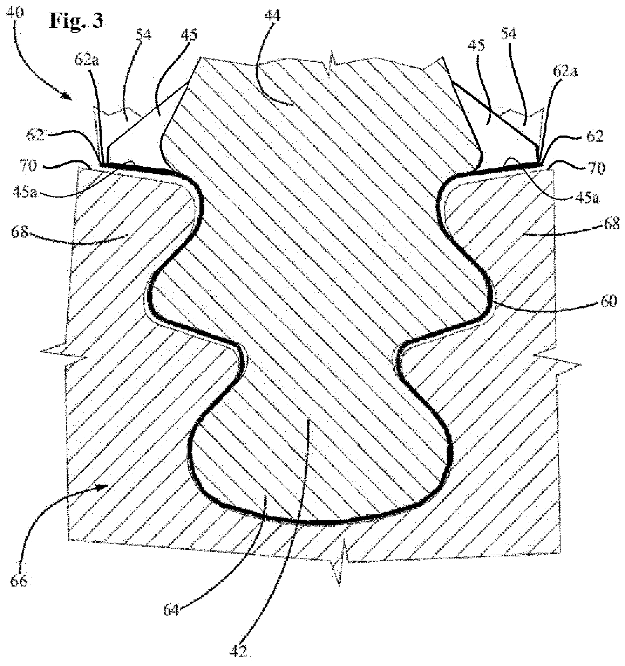

Fig. 3 zeigt in einer vereinfachten und schematischen Schnittdarstellung, die etwa der Schnittlinie III-III der Fig. 2 entspricht, den Schaufelfuß 42, der in einer Schaufelfußaufnahme 64 einer Laufschaufelscheibe 66 aufgenommen ist. Die Laufschaufelscheibe 66 umfasst üblicherweise mehrere in Umfangsrichtung UR nebeneinander angeordnete Laufschaufeln 40. Dabei ist ein jeweiliger Schaufelfuß 42 zwischen zwei benachbarten Scheibenhöckern 68 der Laufschaufelscheibe 66 aufgenom m en.

Aus der Fig. 3 ist ferner das Schaufelfußschutzblech 60 ersichtlich, das als dicke schwarze Linie vereinfacht dargestellt ist. Das Schaufelfußschutzblech 60 umfasst radial außen den Dichtungsabschnitt 62. Der Dichtungsabschnitt 62 ist gegenüber einer jeweiligen radialen Außenfläche 70 eines betreffenden Scheibenhöckers 68 angeordnet. Insbesondere deckt der Dichtungsabschnitt 62 den betreffenden Scheibenhöcker 68 zumindest teilweise ab. In Axialrichtung ist noch ein Teil der hinteren Schottwand 54 ersichtlich.

Aus der Zusammenschau der Fig. 2 und 3 ist ersichtlich, dass die Schottwände 48, 52, 56 zusammen mit dem Dichtungsabschnitt 62 eine Art kastenförmiges Profil bilden, das den Schaufelhals 44 umgibt bzw. einfasst. Der Dichtungsabschnitt 62 kann eine axiale Länge aufweisen, die im Wesentlichen der axialen Länge des Schaufelfußes 42 entspricht. Anders ausgedrückt kann auch davon gesprochen werden, dass die Schottwände 48, 52, 54 und der Schaufelhals 44 eine nach radial unten offene Tasche bilden und der Dichtungsabschnitt 62, wenn das Schaufelfußschutzblech 60 am Schaufelfuß 42 angeordnet ist, die Tasche nach radial unten zumindest teilweise, insbesondere vollständig, schließt.

Der Schnitt in Fig. 2 verläuft vor den Nocken 45, so dass die Nocken in Fig. 3 ungeschnitten dargestellt sind. Die Nocken 45 liegen weisen an ihrer radial unteren Seite jeweils eine Anlagefläche 45a auf, mit der sie den Dichtungsabschnitt 62 stützen.

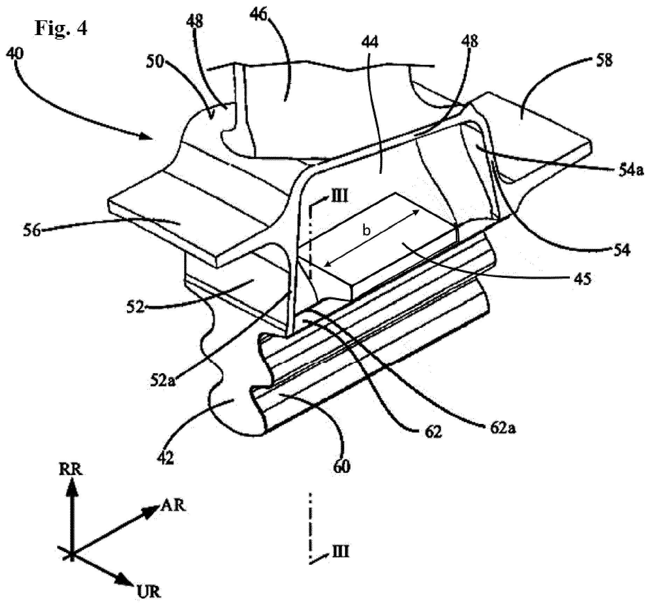

Fig. 4 zeigt ein zu der Fig. 2 ähnliches Ausführungsbeispiel, in dem statt zwei Nocken nur eine Nocke 45 mit einer größeren Breite b in dem Zwischenraum ZR angeordnet ist.

### Bezugszeichenliste

- 10: Fluggasturbine
- 12: Fan
- 14: Mantel
- 16: Verdichter
- 18: inneres Gehäuse
- 20: Brennkammer
- 22: Turbine
- 24: Hochdruckturbine
- 26: Niederdruckturbine
- 27: Laufschaufelkranz
- 28: Hohlwelle
- 29: Hochdruckverdichter
- 30: Welle
- 31: Leitschaufelkranz
- 32: Niederdruckverdichter
- 33: Schubdüse
- 34: Turbinenzwischengehäuse
- 36: radial äußerer Bereich
- 38: Ringraum
- 40: Laufschaufel
- 42: Schaufelfuß
- 44: Schaufelhals
- 45: Nocke
- 45a: Auflagefläche
- 46: Schaufelblatt
- 48: radial äußere Schottwand
- 50: radiale Außenseite der Schottwand
- 52: axial vordere Schottwand
- 52a: überstehender Abschnitt
- 54: axial hintere Schottwand
- 54a: überstehender Abschnitt
- 56: vorderer Deckbandabschnitt
- 58: hinterer Deckbandabschnitt
- 60: Schaufelfußschutzblech
- 62: Dichtungsabschnitt
- 62a: radiale Außenseite
- 64: Schaufelfußaufnahme
- 66: Laufschaufelscheibe
- 68: Scheibenhöcker
- 70: radiale Außenfläche des Scheibenhöckers

## Patentansprüche

1. Laufschaufel (40) für eine Gasturbine (10), insbesondere Fluggasturbine, mit
einem Schaufelfuß (42),
einem sich in Radialrichtung (RR) an den Schaufelfuß (42) anschließenden Schaufelhals (44),
einem sich in Radialrichtung (RR) an den Schaufelhals (44) anschließenden Schaufelblatt (46),
einer radial äußeren Schottwand (48), welche einen radial inneren Begrenzungsabschnitt (50) eines Ringraums einer Gasturbine (10) bildet,
einer axial vorderen Schottwand (52) und einer axial hinteren Schottwand (54), die mit der radial äußeren Schottwand (48) verbunden sind, so dass die Schottwände (48, 52, 54) den Schaufelhals (44) von drei Seiten umgeben, wobei die Schottwände (48, 52, 54) in Umfangsrichtung (UR) über den Schaufelhals (44) vorstehen,
wobei die Laufschaufel (40) zur Anordnung in einer Schaufelfußaufnehme einer Rotorscheibe mit einem zwischen Schaufelfuß (42) und Rotorscheibe angeordnetem Schaufelfußschutzblech (60) vorgesehenen ist,
wobei das Schaufelfußschutzblech (60) wenigstens einen Dichtungsabschnitt (62) aufweist, der sich in Axialrichtung (AR) von der vorderen Schottwand (52) zu der hinteren Schottwand (54) erstreckt und dessen radiale Außenseite (62a) gegenüber der radial äußeren Schottwand (48) angeordnet ist, wenn das Schaufelfußschutzblech (60) am Schaufelfuß (42) angeordnet ist,
wobei ein oder mehrere Nocken (45) an dem Schaufelhals (44) zum Abstützen des Dichtungsabschnitts (62) angeordnet und mit dem Schaufelhals (44) integral verbunden sind.

2. Laufschaufel nach Anspruch 1, **dadurch gekennzeichnet, dass** mindestens zwei Nocken an dem Schaufelhals (44) angeordnet sind.

3. Laufschaufel nach einem der vorhergehenden Ansprüche, **dadurch gekennzeichnet, dass** die eine oder mehreren Nocken (45) in radialer und/oder axialer Richtung konvex, insbesondere ohne Hinterschnitte in radialer und/oder axialer Richtung, ausgebildet sind.

4. System mit einer Laufschaufel (40) nach einem der vorhergehenden Ansprüche und einem Schaufelfußschutzblech (60), das wenigstens einen Dichtungsabschnitt (62) aufweist, der sich in Axialrichtung (AR) von der vorderen Schottwand (52) der Laufschaufel (40) zu der hinteren Schottwand (54) der Laufschaufel (40) erstreckt und dessen radiale Außenseite (62a) gegenüber der radial äußeren Schottwand (48) der Laufschaufel (40) angeordnet ist, wenn das Schaufelfußschutzblech (60) am Schaufelfuß (42) angeordnet ist.

5. System nach Anspruch 4, **dadurch gekennzeichnet, dass** zwischen der oder den Nocken (45) und dem Dichtungsabschnitt (62) des Schaufelfußschutzblechs (60) eine Presspassung vorgesehen ist.

6. Laufschaufelscheibe (66) mit mehreren in Umfangsrichtung nebeneinander angeordneten Laufschaufelaufnahmen (64), in die ein Schaufelfuß (42) einer jeweiligen Laufschaufel (40) des Systems nach Anspruch 5 eingeführt ist, und mit mehreren zwischen den Laufschaufelaufnahmen (64) ausgebildeten Scheibenhöckern (68), wobei der Dichtungsabschnitt (62) des Schaufelfußschutzblechs (60) mit seiner radialen Innenseite gegenüber einer radialen Außenseite (70) eines betreffenden Scheibenhöckers (68) angeordnet ist und insbesondere zwischen der radialen Außenseite (70) eines betreffenden Scheibenhöckers (68) und dem ein oder mehrere Nocken (45) angeordnet ist und einen Bereich der radialen Außenseite (70) des betreffenden Scheibenhöckers (68) abschirmt.

7. Gasturbine, insbesondere Fluggasturbine (10) mit wenigstens einer Laufschaufelscheibe (66) nach Anspruch 6, wobei die Laufschaufelscheibe insbesondere Teil einer Verdichter- oder Turbinenstufe, insbesondere Niederdruckturbinenstufe, der Gasturbine ist.
